# EUROPEAN PATENT APPLICATION

(11) **EP 1 120 455 A1**
(43) Date of publication of application: **01.08.2001**
(21) Application number: 00939166.5
(22) Date of filing: 26.06.2000
(51) Int. Cl.: C11C 3/00, C11B 7/00, A23D 9/00, A23G 1/00

(54) **FRACTIONATED PALM OIL AND PROCESS FOR PRODUCING THE SAME**

(30) Priority: 09.08.1999 JP 22528199
(71) Applicant: ASAHI DENKA KOGYO KABUSHIKI KAISHA, Tokyo 116-0012 (JP)
(72) Inventor: HASHIMOTO, Satsuki, Asahi Denka Kogyo K.K., Tokyo 116-0012 (JP); ARAKAWA, Hiroshi, Asahi Denka Kogyo K.K., Tokyo 116-0012 (JP); NEZU, Toru, Asahi Denka Kogyo K.K., Tokyo 116-0012 (JP); ITO, Tomonori, Asahi Denka Kogyo K.K., Tokyo 116-0012 (JP); YAMAMOTO, Sachiko, Asahi Denka Kogyo K.K., Tokyo 116-0012 (JP); MARUZENI, Shoji, Asahi Denka Kogyo K.K., Tokyo 116-0012 (JP)
(74) Representative: Forstmeyer, Dietmar, Dr. rer. nat., Dipl.-Chem.
(86) International application number: JP0004185
(87) International publication number: WO0110988

(57) **Abstract**

A fractionated palm oil is characterized by including linoleyldipalmitin (P2L) of 2~8 % by weight and oleoyldipalmitin (P2O) of 70% by weight or more. The fractionated palm oil of the present invention has a sharp melting property, and provides chocolates with an excellent heat resistance, snap property, sharp melting property in the palate, without blending with other fats and oil, and inhibits of the increase in viscosity during the tempering process.

## Description

### TECHNICAL FIELD

The present invention relates to a fractionated palm oil having sharp melting characteristics, and more particularly relates to a fractionated palm oil which can be used as hard butter.

### BACKGROUND ART

It is known that a medium-melting point part of palm oil can be obtained by removing the high-melting point part and the low-melting point part from palm oil or palmolein. The thus obtained medium-melting point part of palm oil is used as a cocoa butter substitute, either by itself, or combined with other fats such as shea fats, sal fats, and mango fats, to improve the physical properties of chocolate. Owing to the presence of oleoyldipalmitin (P2O) as its principal component, the medium-melting point part of palm oil is often used with the objective of controlling the hardness and improving the impression of melting in the palate, of chocolate. However, when the medium-melting point part of palm oil is mixed in large quantities, it has the disadvantages that the viscosity in the chocolate tempering process becomes too large, leading to difficulties in the production, or that due to the large presence in the medium-melting point part of palm oil of SSS or diglycerids which are high-melting point part components, the impression of melting in the palate is inadequate.

With the objective of improving the above-mentioned disadvantages of the medium-melting point part of palm oil, a palm oil fractionation method is disclosed in Japanese Patent Laid-open Publication No. 53-84009, wherein after removal of at least 30 % by weight of low-melting point fat relative to the amount of the source oil and fat from palm oil whose high melting-point part is preliminary removed or not removed, the remaining part is fractionated by a known method. In addition, a cacao butter substitute fat is disclosed, in Japanese Patent Laid-open Publication No. 60-217860, which uses the medium-melting point part of palm oil having solid fat content of 70% or more at 20°C, of 10% or more at 30°C, of 1% or less at 3°C, and of 0% at 35°C.

However, the medium-melting point part of palm oil, disclosed in the Japanese Patent Laid-open Publications Nos. 53-84009 and 60-217860, had an insufficiency of sharp melting characteristics, snap property and heat-resistance when used for chocolates.

In addition, methods for obtaining refined fats from palm oil by solvent fractionation, for use in confectionery, are disclosed in Japanese Patent Laid-open Publications Nos. 61-209298 and No. 61-209545, wherein the fractionated palm oil obtained by the above-mentioned methods is adjusted by blending with mono-saturated di-unsaturated triglycerids (SUU)/tri-unsaturated triglycerids (UUU)/linoleyl di-saturated triglicerids (SLS), and particularly with fats containing large amounts of P2O triglycerids to be used as fats for use in confectionery. In other words, the fractionated palm oil disclosed in the above-mentioned publications had small amounts of low-melting point components SUU/UUU/SLS which provide chocolate with flexibiilty, such that it was necessary to blend it with fats containing large amounts of SUU/UUU/SLS, and increase the SUU/UUU/SLS content, and adjust the hardness thereof.

In addition, since the medium-melting point part of palm oil has POP as a main component, crystals tend to become large, such that when mixed in large quantities with chocolate, the disadvantages exist that the brilliance of the chocolate deteriorates over time, and that the bloom resistance degrades slightly. Even adding an emulsifier, which is effective for the bloom resistance of ordinary hard butter, to the medium-melting point part of palm oil of the prior art has no effect, such that improving bloom resistance was extremely difficult.

An object of the present invention is to provide a fractionated palm oil having sharp melting characteristics, which allows chocolates to have excellent heat-resistance, snap property and sharp melting property in a palate, without blending with other fats, and having limited increase in viscosity during the tempering process, and a production method thereof.

In addition, other objects of the present invention are to provide a hard butter having excellent bloom resistance at the same time, and to provide a chocolate with excellent physical properties, allowing for an important increase in the mixing amount of hard butter in chocolate, which is difficult to do in the product design using hard butter of the prior art.

### DISCLOSURE OF INVENTION

The present invention achieves the above-mentioned objects by providing a fractionated palm oil including linoleyldipalmitin (P2L) of 2 ~ 8% by weight, and oleoyldipalmitin (P2O) of 70% by weight or more.

In addition, the present invention provides a method for producing a fractionated palm oil wherein a low-melting point part of palm oil is removed by solvent fractionation from a fractionated palm oil fraction in which the iodine value thereof is of between 38 and 50, the content of tri-saturated triglycerids (SSS) is of 0.5% by weight or less, the weight ratio of linoleyldipalmitin (P2L)/oleoyldipalmitin (P2O) is of 0.25 or less.

In addition, the present invention provides a hard butter comprising a fractionated palm oil including linoleyldipalmitin (P2L) of 2~8% by weight, and oleoyldipalmitin (P2O) of 70% by weight or more. Moreover, the present invention provides a hard butter including an emulsifier in addition to the above-mentioned hard butter.

In addition, the present invention provides a chocolate wherein the above-mentioned hard butter is used.

### BEST MODE FOR CARRYING OUT THE INVENTION

Hereinafter, a fractionated palm oil and a method for producing the same according to the present invention will be explained in detail based on the preferred embodiments.

The fractionated palm oil of the present invention includes linoleyldipalmitin (P2L) of 2~8% by weight (simply "%" hereinafter), and oleoyldipalmitin (P2O) of 70% or more.

In the fractionated palm oil of the present invention, the content of P2L is the sum of the amounts of PPL and PLP, and is of 2~8%, preferably of 2~6%, and more preferably of 2~4%. If the content of P2L is of less than 2%, when used in chocolates, the chocolate is too hard, and lacks flexibility. If the content of P2L is of more than 8%, when used in chocolates, the heat-resistance, the snap property and the melting in the palate are inadequate.

In addition, the content of P2O is the sum of the amounts of PPO and POP, and is of 70% or more, preferably of 72% or more, and more preferably of 74% or more. If the content of P2O is of less than 70%, when used in chocolates, it leads to inadequate snap property and a sharp melting in the palate cannot be obtained and thus it is not desirable. In the present invention, the ratio between the percentage in weight of 1(3)-oleoyldipalmitin (PPO) and the percentage in weight of 2-oleoyldipalmitin (POP) of 0.07 or less is preferred. More preferred ratio is of 0.055 or less, and the most preferred ratio is of 0.04 or less. If the PPO/POP ratio is greater than 0.07, when used in chocolate, the snap property tends to become poor and a sharp melting in the palate is difficult to obtain.

In the fractionated palm oil of the present invention, the content of tri-saturated triglycerids (SSS) is of 1.5% or less, preferably of 0.8% or less, and more preferably of 0.4% or less. The content of diglycerids is of 1% or less, preferably of 0.5% or less, and more preferably of 0.1% or less.

If the content of SSS is of greater than 1.5%, when used in chocolates, the melting in the palate is not adequate, and the working property in the tempering process becomes inadequate, thus it is not desirable. In addition, if the content of diglycerids is of greater than 1%, the working property becomes inadequate due to an increase in the viscosity during tempering, and the melting in the palate is not adequate, thus it is not desirable.

The fractionated palm oil of the present invention as described above is obtained by removing a low-melting point part using solvent fractionation from a fractionated palm fraction having an iodine value of 38~50 (preferably of 40~48), tri-saturated triglycerids (SSS) of 0.5% by weight or less (preferably of 0.3% by weight or less), a linoleyldipalmitin (P2L)/oleoyldipalmitin (P2O) weight ratio of 0.25 or less (preferably of 0.20 or less).

The fractionated palm fractions mentioned herein, having an iodine value of 38~50, tri-saturated triglycerids (SSS) of 0.5% by weight or less, a linoleyldipalmitin (P2L)/oleoyldipalmitin (P2O) weight ratio of 0.25 or less, can be obtained using methods such as the following methods 1) to 6).
1) Method for removing crystalline part from the medium-melting point part of palm oil by dry fractionation.
   The medium-melting point part of palm oil having an iodine value of 40~50 is completely melted, cooled down to 24~27°C, preferably down to 25~26°C, to precipitate crystals, and the crystalline part is removed therefrom.
2) Method for removing crystalline part from the medium-melting point part of palm oil by solvent fractionation.
   With respect to 100 parts by weight of the medium-melting point part of palm oil having an iodine value of 40~50, 30~70 parts by weight of solvent are added to completely dissolve the former. Then, the fraction source micella obtained is cooled down to 15~20°C in the case where acetone is used, and down to 0~ 15°C in the case where hexane is used, to precipitate crystals, and the crystalline part is removed therefrom. During the process, adding seeds (such as fraction source micella preliminary solidified by cooling down), which are to be nuclei for crystals, promotes crystallization.
3) Method for removing crystalline part from palmolein by dry fractionation, and further removing the soft part oil by dry fractionation.
   Palmolein having a clouding point of 6~15°C and an iodine value of 55~58 is completely melted, and cooled down to 16~24°C, preferably down to 18~22°C, to precipitate crystals. The crystalline part is removed therefrom to obtain the olein fraction having an iodine value of 56~59 and SSS of 0.3% or less. During the process, adding seeds (such as palmstearin, palmolein or other solid fats preliminary solidified by cooling down), which are to be nuclei for crystals, promotes crystallization.
   Then, the olein fraction obtained is completely melted, and then cooled down to 10~20°C, preferably down to 12~18°C, to precipitate crystals and obtain the crystalline part. During the process, adding seeds (such as palmstearin, palmolein or other solid fats preliminary solidified by cooling down), which are to be nuclei for crystals, promotes crystallization.
4) Method for removing crystalline part from palmolein by dry fractionation, and further removing the soft part oil by solvent fractionation.
   Palmolein having a clouding point of 6~15°C and an iodine value of 55~58 is completely melted, and cooled down to 16~24°C, preferably down to 18~22°C, to precipitate crystals. The crystalline part is removed therefrom to obtain the olein fraction having an iodine value of 56~59 and SSS of 0.3% or less. During the process, adding seeds (such as palmstearin, palmolein or other solid fats preliminary solidified by cooling down), which are to be nuclei for crystals, promotes crystallization.
   With respect to 100 parts by weight of the olein fraction obtained, 50~500 parts by weight of solvent are added to completely dissolve the former. Then, the fraction source micella obtained is cooled down to -5~5°C, preferably down to -2~2°C in the case where acetone is used, and down to between -15~0°C, preferably down to -10~-5°C, in the case where hexane is used, to obtain the crystalline part. During the process, adding seeds (such as fraction source micella preliminary crystallized by cooling down), which are to be nuclei for crystals, promotes crystallization.
5) Method for removing crystalline part from palm oil by dry fractionation, and further removing the soft part oil by dry fractionation.
   Palm oil is completely melted, and cooled down to 16~24°C, preferably down to 16~20°C, to precipitate crystals. The crystalline part is removed therefrom to obtain the olein fraction having an iodine value of 56~59 and SSS of 0.3% or less.
   Then, the obtained olein fraction is completely melted, and cooled down to 10~ 20°C, preferably down to 12~18°C, to precipitate crystals and obtain the crystalline part. During the process, adding seeds (such as palmstearin, palmolein or other solid fats preliminary solidified by cooling down), which are to be nuclei for crystals, promotes crystallization.
6) Method for removing crystalline part from palm oil by dry fractionation, and further removing the soft part oil by solvent fractionation.
   Palm oil is completely melted, and cooled down to 16~24°C, preferably down to 16~20°C, to precipitate crystals. The crystalline part is removed therefrom to obtain the olein fraction having an iodine value of 56~59 and SSS of 0.3% or less.
   With respect to 100 parts by weight of the olein fraction obtained, 50~500 parts by weight of solvent are added to completely dissolve the former. Then, the fraction source micella obtained is cooled down to -5~5°C, preferably down to-2~2°C in the case where acetone is used, and down to -15~0°C, preferably down to -10~-5°C in the case where hexane is used, to obtain the crystalline part. During the process, adding seeds (such as fraction source micella preliminary crystallized by cooling down), which are to be nuclei for crystals, promotes crystallization:

In addition, the low-melting point part is removed by solvent fractionation from the fractionated palm fractions having an iodine value of 38~50, tri-saturated triglycerids (SSS) of 0.5% by weight or less, a linoleyldipalmitin (P2L)/oleoyldipalmitin (P2O) weight ratio of 0.25 or less, obtained using methods such as the above-mentioned methods 1) to 6).

The removal of the low-melting point part by solvent fractionation is performed as follows. With respect to 100 parts by weight of the fractionated palm fractions obtained using methods such as the above-mentioned methods 1) to 6), 200~600 parts by weight, preferably 300~500 parts by weight of solvent are added to completely dissolve the former. Then, the fraction source micella obtained is cooled down to 5~15°C, preferably down to 7~13°C in the case where acetone is used, and down to -10~5°C, preferably down to -5~0°C in the case where hexane is used, to obtain the crystalline part. However, for an effective removal of diglycerids, a polar solvent such as acetone is preferred to a non-polar solvent such as hexane. In addition, during the process, adding seeds (such as fraction source micella preliminary crystallized by cooling down), which are to be nuclei for crystals, promotes crystallization.

Thus, the fractionated palm oil of the present invention including linoleyldipalmitin (P2L) of 2~8% by weight, and oleoyldipalmitin (P2O) of 70% by weight or more is obtained.

The fractionated palm oil of the present invention obtained can be used as a hard butter. In addition, the fractionated palm oil of the present invention can be used as a hard butter for use in chocolates.

In addition, the fractionated palm oil of the present invention can be used, in addition to chocolates, in applications of confectionery fats and oil such as fats and oil for bakery, spray fats and oil and fats and oil for cream.

In the following, the hard butter and chocolates using the same according to the present invention will be explained in detail.

The hard butter of the invention comprises the fractionated palm oil including linoleyldipalmitin (P2L) of 2~8% by weight, and oleoyldipalmitin (P2O) of 70% by weight or more.

The hard butter of the present invention may consist of the above-mentioned fractionated palm oil only, or may comprise fats and oil such as cacao fats, sal fats, shea fats, illipe fats, mango kernel oil, kokum fats, as well as fractionated oil and esterified fats thereof, mixed with the fractionated palm oil. In such a case, the mixing amount of the above-mentioned fractionated oil in the hard butter of the present invention is preferably 1% by weight or more, and more preferably 3% by weight or more.

In addition, it is desirable to add an emulsifier to the hard butter of the present invention. Adding an emulsifier improves bloom resistance. There may be no restriction on the emulsifier as long as it is usable in food. However, it is desirable to use one or more types of emulsifiers selected from the group consisting of polyglycerin fatty acid esters, sucrose fatty acid esters and sorbitan fatty acid esters, and it is more desirable to use polyglycerin fatty acid esters or sucrose fatty acid esters.

Preferably 0.05~15% by weight, more preferably 0.1~12%, most preferably 0.2~ 8% by weight of emulsifier is included in the hard butter of the present invention. If the amount of emulsifier is less than 0.05% by weight, the bloom inhibiting effect is weak, and if it exceeds 15% by weight, it has the tendency to deteriorate the taste and to make the melting in the mouth inadequate.

Polyglycerin fatty acid esters with a degree of polymerization of 4~10, preferably of 6~8, esterified averagely with 4 moles or more, preferably with 6 moles or more of fatty acids, are desirable as the above-mentioned polyglycerin fatty acid esters. Fatty acids having up to 24 carbons, preferably saturated fatty acids having 16~22 carbons, can be exemplified as fatty acids constituting the above-mentioned polyglycerin fatty acid esters.

Sucrose fatty acid esters with an HLB of 1 or less and whose constituent fatty acids comprises fatty acids having up to 24 carbons, and preferably comprises saturated fatty acids having 16~22 carbons, can be exemplified as the above-mentioned sucrose fatty acid esters.

Sorbitan fatty acid esters with an HLB of 3 or less and whose constituent fatty acids comprises fatty acids having up to 24 carbons, and preferably comprises saturated fatty acids having 16~22 carbons, can be exemplified as the above-mentioned sucrose fatty acid esters.

In addition, emulsifiers other than the above-mentioned emulsifiers, cacao powder, sugar, proteins, dairy products, carbohydrates, vitamins, condiments, spices, moisture, or the like included in regular chocolates can be included as needed in the hard butter of the present invention.

In addition, the hard butter comprising the above-mentioned fractionated palm oil is used in chocolates. In this case, the mixing amount of the hard butter, with respect to 100 parts by weight of the chocolate, is preferably 1~60 parts by weight, and more preferably 1 ~50 parts by weight.

Further, the chocolate of the present invention is obtained using the above-mentioned hard butter, and has an excellent heat-resistance, snap property and sharp melting characteristics in the palate.

Hereinafter, the present invention will be explained in further detail using examples. However, the present invention is not limited in any way to these examples.

### (Example 1)

Palmolein (clouding point of 10°C, iodine value of 56.3) was heated for 1 hour at 60°C and melted completely. This was gently stirred and cooled down to 20°C over 4 hours. Then, with respect to the above-mentioned palmolein, 0.05% by weight of crystals of palm oil obtained by cooling down to 30°C were added as seeds, and the mixture was further kept at 20°C for 2 hours. The mixture was then fractionated into a filtrate part of 95% by weight and a crystalline part of 5% by weight, to obtain the filtrate part having an iodine value of 56.7 and SSS of 0.1 % by weight.

In addition, a second fractionation was performed according to the following method. With respect to 100 parts by weight of filtrate, 300 parts by weight of acetone were added to the filtrate part obtained in the first fractionation to make a fraction source micella. It was heated at 45°C for 30 minutes and dissolved completely. It was then cooled down to 10°C over 2 hours while stirring gently, and 1% by weight of seeds were added with respect to this fraction source micella. Crystals obtained by cooling a fraction source micella down to-20°C were used as seeds. The mixture was further cooled down to 0°C over 2 hours while continuing to stir gently, and, after being kept at 0°C for 1 hour, it was filtered and fractionated into an olein fraction of 60% by weight and a stearin fraction of 40% by weight. The stearin fraction obtained (palm fraction) had an iodine value of 42.1, SSS of 0.2% by weight and a P2L/P2O weight ratio of 0.19.

The third fractionation was performed according to the following method. With respect to 100 parts by weight of the stearin fraction obtained in the second fractionation, 300 parts by weight of acetone was added to make a fraction source micella. This was heated at 50°C for 30 minutes and dissolved completely prior to cooling down to 18°C over 2 hours while stirring gently. With respect to the fraction source micella, 1% by weight of the same seeds as the ones used in the second fractionation were added. Then, the mixture was cooled down to 10°C over 2 hours while stirring gently, and after being kept for 1 hour, it was filtered and fractionated into an olein fraction of 40% by weight and a stearin fraction 60% by weight.

The triglycerid composition and the solid fat content (SFC) of the stearin fraction obtained (fractionated palm oil) are shown in Table 1.

### (Example 2)

First, in the first fractionation, palm oil was heated at 60°C for 1 hour and melted completely. This was cooled down to 18°C over 3 hours while stirring gently, and kept for 6 hours. Then, it was fractionated into a filtrate part of 75% by weight and a crystalline part of 25% by weight. The filtrate part obtained had an iodine value of 57.0 and SSS of 0.1% by weight.

In addition, a second fractionation was performed according to the following method. With respect to 100 parts by weight of filtrate, 300 parts by weight of acetone was added to the filtrate part obtained in the first fractionation, to make a fraction source micella. This was heated at 45°C for 30 minutes and dissolved completely. It was then cooled down to 10°C over 2 hours while stirring gently, and with respect to this fraction source micella, 1% by weight of seeds were added. Crystals obtained by cooling a fraction source micella down to-20°C were used as seeds. The mixture was further cooled down to 0°C over 2 hours while continuing to stir gently, and, after being kept at 0°C for 1 hour, it was filtered and fractionated into an olein fraction of 60% by weight and a stearin fraction of 40% by weight. The stearin fraction obtained (palm fraction) had an iodine value of 42.0, SSS of 0.2% by, weight and a P2L/P2O weight ratio of 0.20.

The third fractionation was performed according to the following method. With respect to 100 parts by weight of the stearin fraction obtained in the second fractionation, 300 parts by weight of acetone was added to make a fraction source micella. This was heated at 50°C for 30 minutes and dissolved completely. After then, it was cooled down to 18°C over 2 hours while stirring gently, and with respect to the fraction source micella, 1% by weight of the same seeds as the ones used in the second fractionation were added. Then, the mixture was cooled down to 10°C over 2 hours while stirring gently, and after being kept for 1 hour, it was filtered and fractionated into an olein fraction of 40% by weight and a stearin fraction 60% by weight.

The triglycerid composition and the SFC of the stearin fraction obtained (fractionated palm oil) are shown in Table 1.

### (Example 3)

First, in the first fractionation, medium-melting point part of palm oil (iodine value of 47.1) was heated at 60°C for 1 hour and melted completely. This was cooled down to 25°C over 3 hours while stirring gently, and kept for 13 hours. Then, it was fractionated into a filtrate part of 93% by weight and a crystalline part of 7% by weight. The filtrate part obtained (palm fraction) had an iodine value of 48.2, SSS of 0.1% by weight and a P2L/P2O weight ratio of 0.22.

In addition, a second fractionation was performed according to the following method. With respect to 100 parts by weight of filtrate obtained in the first fractionation, 400 parts by weight of acetone was added to make a fraction source micella. This was heated at 45°C for 30 minutes and dissolved completely. After then, it was cooled down to 15°C over 1 hour while stirring gently, and with respect to the fraction source micella, 0.2% by weight of seeds were added. Crystals obtained by cooling a fraction source micella down to -20°C were used as seeds. The mixture was further cooled down to 8°C over 1 hour while continuing to stir gently, and, after being kept for 1 hour, it was filtered and fractionated into an olein fraction of 55% by weight and a stearin fraction of 45% by weight.

The triglycerid composition and the SFC of the stearin fraction obtained (fractionated palm oil) are shown in Table 1.

### (Comparative Example 1)

The first and second fractionations were performed following the same method as in the Example 1. The third fractionation was performed following the same method as in the Example 1, except for changing the last cooling temperature from 10°C in Example 1 to 0°C, to fractionate into an olein fraction of 20% by weight and a stearin fraction of 80% by weight.

The triglycerid composition and the SFC of the stearin fraction obtained (fractionated palm oil) are shown in Table 1.

### (Comparative Example 2)

In Example 1, the first fractionation was performed as follows. With respect to 100 parts by weight of palmolein (clouding point of 10°C, iodine value of 56.3), 300 parts by weight of acetone was added to make a fraction source micella. This was heated at 45°C for 30 minutes and dissolved completely. After then, it was cooled down to 15°C over 2 hours while stirring gently, and with respect to the fraction source micella, 1% by weight of seeds were added. Crystals obtained by cooling a fraction source micella down to -20°C were used as seeds. The mixture was further cooled down to 0°C over 2 hours while continuing to stir gently, and, after being kept at 0°C for 1 hour, it was filtered and fractionated into an olein fraction of 55% by weight and a stearin fraction of 45% by weight. The stearin fraction obtained (palm fraction) had an iodine value of 44.7, SSS of 1.1% by weight and a P2L/P2O weight ratio of 0.24.

The second fractionation was performed according to the following method. With respect to 100 parts by weight of crystals obtained in the first fractionation, 300 parts by weight of acetone was added to make a fraction source micella. This was heated at 50°C for 30 minutes and dissolved completely. After then, it was cooled down to 15°C over 2 hours while stirring gently, and with respect to the fraction source micella, 1% by weight of seeds were added. Crystals obtained by cooling a fraction source micella down to -20°C were used as seeds. The mixture was further cooled down to 0°C over 2 hours while continuing to stir gently, and, after being kept for 1 hour, it was filtered and fractionated into an olein fraction of 20% by weight and a stearin fraction of 80% by weight.

The triglycerid composition and the SFC of the stearin fraction obtained (fractionated palm oil) are shown in Table 1.

### (Comparative Example 3)

The same method as in the Comparative Example 2 was followed up to the first fractionation, and the second fractionation was performed following the same method as in the Comparative Example 2, except for changing the last cooling temperature from 0°C in the Comparative Example 2 to 10°C, to fractionate into an olein fraction of 25% weight and a stearin fraction of 75% by weight.

The triglycerid composition and the SFC of the stearin fraction obtained (fractionated palm oil) are shown in Table 1.

**Table 1**

| Triglycerid composition and solid fat content (SFC) of fractionated palm oil | | | | | | |
|---|---|---|---|---|---|---|
| | Example 1 | Example 2 | Examples 3 | Comparative Example 1 | Comparative Example 2 | Comparative Example 3 |
| Triglycerid composition (% by weight) | | | | | | |
| SSS | 0.6 | 0.5 | 0.8 | 0.6 | 1.8 | 2.4 |
| P2L | 6.1 | 6.5 | 5.3 | 9.3 | 10.2 | 9.1 |
| P2O | 73.0 | 72.6 | 71.9 | 70.4 | 66.0 | 68.0 |
| PPO | 2.1 | 3.5 | 4.1 | 6.4 | 6.6 | 6.7 |
| POP | 70.9 | 69.1 | 67.8 | 64.0 | 59.4 | 61.3 |
| PPO/POP | 0.03 | 0.05 | 0.06 | 0.10 | 0.11 | 0.11 |
| Diglycerids | 0.3 | 0.2 | 0.3 | 0.2 | 1.5 | 1.2 |
| SFC | | | | | | |
| 20°C | 90 | 88 | 87 | 85 | 82 | 84 |
| 25°C | 86 | 83 | 80 | 77 | 69 | 74 |
| 30°C | 42 | 39 | 33 | 26 | 25 | 26 |
| 33°C | 0 | 0 | 0 | 0 | 3 | 6 |
| 35°C | 0 | 0 | 0 | 0 | 0.3 | 1 |
| Measurement of the solid fat content (SFC) was performed as follows. With the exception of the aging conditions of fats and oil, the measurement was performed according to a known method (A.O.C.S. Official Method Cd 16-81 Solid Fat Content) using a PRAXIS MODEL SFC-900. Aging was performed by completely melting the fats and oil prior to solidification by standing still at 0°C for 30 minutes, followed by standing still at 20°C for 2 hours, and standing still at 30°C and 20°C for 1 hour and 2 hours respectively, was repeated 7 times. The temperatures for measuring SFC were 10°C, 20°C, 25°C. 30°C, 33°C, 35°C and 37°C. Incidentally, the SFCs at 20°C, 30°C, 33°C and 35°C are shown in Table 1. From an HPLC fractionation, P2O fractions were collected and the PPO/POP ratio was determined by measuring the composition of the fatty acid at position 2 of the P2O fraction. HPLC fractionation was performed by injecting 3mL of a 10% (W/V) acetone solution of the sample to be measured into an elution solution (acetone/acetonitrile = 7/3, flow rate = 18 mL/min) to pass through an ODS column (20mm diameter x 250mm). Then, the P2O faction was detected by differential refractometry to be isolated. The composition of the fatty acid at posilion 2 was determined according to the following method. 50mg of the P2O fraction was injected into a mixed solution of 7mL of a 0.1M Tris-HCl (pH 8.0) buffer solution and 0.5mL of a 1M CaCl₂ solution. Then, 2mL of a buffer solution containing 10% (W/V) of lipase specific for the positions 1 and 3 was added. After hydrolysis at 40°C, the lipid part was extracted with ethylether. From the lipid part, the MG fraction was isolated by thin layer chromatography (developing solvent: ethylether/hexane/formic acid = 70/30/0.7), extracted with hexane and the fat composition was measured according to a known method (A.O.C.S. Official Method Ce 1c-89 Fatty acid Composition by GLC). | | | | | | |

### (Chocolate production tests)

### (Example 4)

Using the hard butter comprising the fractionated palm oil obtained in Example 2, a chocolate with the composition shown in Table 2 was produced. The chocolate production test and the evaluation of the chocolate obtained are shown in Table 3.

### (Example 5)

Using the hard butter comprising 99% by weight of fractionated palm oil obtained in Example 2 and 1% by weight of polyglycerin fatty acid ester (hexaglycerin octastearate), a chocolate with the composition shown in Table 2 was produced. The chocolate production test and the evaluation of the chocolate obtained are shown in Table 3.

### (Example 6)

Using the hard butter comprising 99% by weight of fractionated palm oil obtained in Example 2 and 1% by weight of sucrose fatty acid ester (sucrose stearate, HLB thereof is 1 or less), a chocolate with the composition shown in Table 2 was produced. The chocolate production test and the evaluation of the chocolate obtained are shown in Table 3.

### (Example 7)

Using the hard butter comprising 99% by weight of fractionated palm oil obtained in Example 2 and 1% by weight of sorbitan fatty acid ester (sorbitantristearate, HLB thereof is equal to 2.5), a chocolate with the composition shown in Table 2 was produced. The chocolate production test and the evaluation of the chocolate obtained are shown in Table 3.

### (Comparative example 4)

Using the hard butter comprising the fractionated palm oil obtained in Comparative Example 2, a chocolate with the composition shown in Table 2 was produced. The chocolate production test and the evaluation of the chocolate obtained are shown in Table 3.

### (Comparative Example 5)

Using the hard butter comprising 99% by weight of fractionated palm oil obtained in Comparative Example 2 and 1% by weight of polyglycerin fatty acid ester (hexaglycerin octastearate), a chocolate with the composition shown in Table 2 was produced. The chocolate production test and the evaluation of the chocolate obtained are shown in Table 3.

### (Comparative Example 6)

Using the hard butter comprising 99% by weight of fractionated palm oil obtained in Comparative Example 2 and 1% by weight of sucrose fatty acid ester (sucrose stearate, HLB thereof is 1 or less), a chocolate with the composition shown in Table 2 was produced. The chocolate production test and the evaluation of the chocolate obtained are shown in Table 3.

### (Comparative Example 7)

Using the hard butter comprising 99% by weight of fractionated palm oil obtained in Comparative Example 2 and 1% by weight of sorbitan fatty acid ester (sorbitantristearate, HLB thereof is equal to 2.5), a chocolate with the composition shown in Table 2 was produced. The chocolate production test and the evaluation of the chocolate obtained are shown in Table 3.

**Table 2**

| Chocolate composition | |
|---|---|
| Ingredients | Proportions in the composition (parts by weight) |
| Sugar | 46 |
| Whole milk powder | 17 |
| Cacao mass | 15 |
| Hard butter | 22 |
| Lecithin | 0.40 |
| Vanillin | 0.03 |
| Total | 100.43 |

Tempering and molding were performed as follows. 400g of chocolate paste were collected in a stainless steel bowl. While stirring with a rubber spatula, it was cooled down to 26°C in water at 20°C. At 26°C, the cooling was stopped and while maintaining the temperature, stirring continued for approximately 5 minutes. When the viscosity increased, the temperature was raised to 28°C with warm water at 30°C, and the chocolate was stirred vigorously for about 2 minutes. Then, the chocolate was obtained by pouring it into a 70mm x 30mm x 10mm mold and cooling it at 5°C.

**Table 3**

| Chocolate production test and evaluation of the chocolate | | | | | |
|---|---|---|---|---|---|
| | Workabiilty during tempering | Sharp meltability | Snap property | Heat resistance | Bloom resistance |
| Example 4 | A | A | A | A | 25 |
| Example 5 | A | A | A | A | 37 |
| Example 6 | A | A | A | A | 38 |
| Example 7 | A | A | A | A | 34 |
| Comparative Example 4 | C | B | C | C | 25 |
| Comparative Example 5 | C | B | C | C | 26 |
| Comparative Example 6 | C | B | C | C | 27 |
| Comparative Example 7 | C | B | C | C | 26 |
| A: excellent, B: bad, C: very bad | | | | | |

The chocolate obtained was aged for one week at 20°C, and the evaluations shown in Table 3 were performed. The results thereof are shown in Table 3. Incidentally, "snap property" is an evaluation of the hardness felt when biting (whether a sharp noise is produced when breaking), "sharp meltability" is an evaluation of how well the last bit of chocolate melts in the palate, and these evaluations are based on the evaluation of a tasting test performed by 10 persons. In addition, in the bloom resistance test, under a temperature condition where the chocolate is left at 20°C for 12 hours, and then at 28°C for 12 hours in one cycle, the change with time on the surface of the chocolate was observed, and the number of cycle when a blooming on the surface becomes identifiable was noted.

It is clear from Table 3, that when the fractionated palm oil of the present invention was used, a chocolate was obtained, having excellent tempering property, extremely satisfying sharp meltability and snap property, and an excellent heat resistance, as compared to when the conventional medium part of palm oil was used. In addition, it is noticeable that the fractionated palm oil of the present invention had a remarkably increased bloom resistance owing to the addition of an emulsifier.

### INDUSTRIAL APPLICABILITY

The fractionated palm oil of the present invention includes linoleyldipalmitin (P2L) of 2~8 % by weight, and oleoyl dipalmitin (P2O) of 70% by weight or more, can be used as a hard butter, provides chocolates with excellent heat resistance, snap property, sharp melting property in the palate without blending with other fats and oil, and inhibits the increase in viscosity during the tempering process.

In addition, by adding an emulsifier, a hard butter having adequate bloom resistance and the above-mentioned physical properties can be obtained.

## Claims

1. A fractionated palm oil characterized by including linoleyldipalmitin (P2L) of 2~8 % by weight and oleoyldipalmitin (P2O) of 70% by weight or more.

2. The fractionated palm oil according to claim 1, wherein a ratio between the percentage in weight of 1(3)-oleoyldipalmitin (PPO) and the percentage in weight of 2-oleoyldipalmitin (POP) is 0.07 or less.

3. The fractionated palm oil according to claim 1, wherein a content of tri-saturated triglycerid (SSS) is 1.5% by weight or less, and a content of diglycerid is 1% by weight or less.

4. A method of producing fractionated palm oil, characterized in that a low-melting point part is removed by solvent fractionation, from a fractionated palm oil having an iodine value of 38~50, tri-saturated triglycerid (SSS) of 0.5% by weight or less, and a linoleyldipalmitin (P2L)/oleoyl dipalmitin (P2O) weight ratio of 0.25 or less.

5. A hard butter comprising a fractionated palm oil including linoleyldipalmitin (P2L) of 2~8 % by weight and oleoyldipalmitin (P2O) of 70% by weight or more.

6. The hard butter according to claim 5, further including an emulsifier.

7. A chocolate characterized by using the hard butter according to claim 5 or 6.
